# EUROPÄISCHE PATENTANMELDUNG

(11) **EP 2 250 926 A2**
(43) Veröffentlichungstag der Anmeldung: **17.11.2010**
(21) Anmeldenummer: 10003175.6
(22) Anmeldetag: 25.03.2010
(51) Int. Cl.: A47B 47/04, F16B 12/12

(54) **Plattenverbindung und ihre Herstellung**

(30) Priorität: 11.05.2009 DE 102009020724
(71) Anmelder: Bünger, Jörg, 50825 Köln (DE)
(72) Erfinder: Bünger, Jörg, 50825 Köln (DE)
(74) Vertreter: Holland, Ralf

(57) **Zusammenfassung**

Bei einem Verfahren für das Herstellen einer Verbindung zweier aufeinander senkrecht stehenden, sich durchdringenden Platten, wird von einer Schmalseite (3) einer ersten Platte (2) aus ein Schlitz (4) mit parallelen Schlitzwänden (6,7) gefräst, wobei die Drehachse des Fräsers senkrecht auf der Platte (2) steht, entspricht durch ein Einbringen von Ausnehmungen (8,9) vor einem Schlitzboden (5) dessen Breite (b) senkrecht zu den Schlitzwänden (6,7) wenigstens der Breite (a) des Schlitzes (4), wobei die Breite (a) des Schlitzes (4) geringer bemessen ist als die nominelle Materialstärke der zweiten Platte (12), wird über dem Schlitz (4) eine Nut (10) eingebracht, deren Breite (d) größer bemessen ist als die nominelle Materialstärke der zweiten Platte (12), deren Länge (g) sich über den Schlitzboden (5) hinaus erstreckt und deren Tiefe (e) derart bemessen ist, dass ein Steg (11) von definierter Materialstärke (f) verbleibt, werden in die zweite Platte (12) zwei sich gegenüberliegende Nuten (13,14) in die Flachseiten eingebracht, deren jeweilige Breite (h,i) der definierten Materialstärke (f) entspricht, deren Tiefe derart,bemessen ist, dass ein Steg (15) zwischen den Nuten (13,14) verbleibt, dessen Materialstärke (k) geringer bemessen ist als die Breite (a) des Schlitzes (4).

## Beschreibung

Die Erfindung betrifft ein Verfahren für die Herstellung einer Verbindung zweier aufeinander senkrecht stehenden, sich durchdringenden Platten und in weiterer Ausgestaltung eine Schraubverbindung zweier Schmalseite auf Flachseite angeordneten, senkrecht aufeinander stehenden Platten.

Holzverbindungen sind in vielfältigen Formen seit langem bekannt und bewährt. Neben den Techniken des Überblattens finden als formschlüssige Verbindungen insbesondere solche Verwendung, die auf das Prinzip von Nut und Zapfen zurückgreifen.

Solche Nut- und Zapfenverbindungen, häufig auch als Nut und Feder bezeichnet, erlauben einen schmalseitigen Anschluss von Platten aneinander, beispielsweise bei Dielen, Paneelen, Laminaten oder dergleichen.

Stehen Platten aufeinander senkrecht, Flachseite auf Schmalseite, bieten sich für das Verbinden der Platten Zinkenverbindungen in vielfältigen Formen oder speziell Gratungen an. Es sind diese Verbindungen jedoch nicht geeignet, wenn senkrecht aufeinander stehende Platten sich durchdringen. Für die Ausführung einer derartigen Verbindung verbleibt lediglich das Einbringen eines Schlitzes in eine erste Platte, dessen Breite der Materialstärke der einzubringenden zweiten Platte im Wesentlichen entspricht, beispielsweise in der DE 197 05 107 A1 erläutert.

Für eine geringfügige Erhöhung der mechanischen Stabilität kann, insbesondere bei Platten gleicher Abmessungen, dabei die Kreuzüberblattung Verwendung finden, bei der die beiden Platten mit korrespondierenden Schlitzen versehen werden.

Die mechanische Stabilität derartiger Holzverbindungen ist insbesondere bei den heute in der Möbelindustrie verwendeten Materialen wie Span- und insbesondere Faserplatten wenig befriedigend, da solche Platten in Randbereichen sehr leicht ausbrechen. Es werden deshalb häufig die in Rede stehenden Verbindungen durch Beschläge ausgesteift, durch die jedoch die optische Qualität beeinträchtigt werden kann. Erfolgt ferner des Öfteren eine Montage eines mit derartigen Beschlägen versehenen Möbels, weisen die hierfür verwendeten Schrauben, Dübel oder dergleichen in ihren Befestigungslöchern von Mal zu Mal eine geringeren Halt auf, beispielsweise durch das Ausbrechen von Dübellöchern, Totlaufen von Schraublöchern oder dergleichen mehr und nimmt demzufolge die mechanische Stabilität derartiger Verbindungen ab. Ferner werden für die Montage wie die Demontage solcher mit Beschlägen versehenen Möbel regelmäßig Werkzeuge benötigt.

Ein weiteres Problem, insbesondere bei einer industriellen Fertigung von Möbeln, stellen die wenn auch nur geringen Maßtoleranzen in der Stärke der verarbeiteten Platten dar. Die Breite eines Schlitzes, in den eine Platte eingebracht werden soll, ist daher auf die größte Materialstärke einer solchen Platte auszulegen, was sofort zu einem Verlust der Stabilität einer solchen Verbindung führt.

Vor diesem technischen Hintergrund macht die Erfindung es sich zur Aufgabe, eine Verbindung zweier aufeinander senkrecht stehenden, sich durchdringenden Platten zu ermöglichen, die werkzeuglos zusammensetzbar ist, einfach und schnell hergestellt werden kann und die sich auch leicht wieder zerlegen lässt, wobei für eine lange Lebensdauer ein Verschleiß minimiert sein soll.

Die Verbindung der Platten soll dabei äußerst maßgenau vorgenommen werden, um eine hohe mechanische Stabilität zu erreichen. Dies unabhängig von Maßtoleranzen bei der Materialstärke der verwendeten Platten, auch bei einer industriellen Fertigung.

Eine solche industrielle Fertigung verlangt ferner, dass ein in seine Bauteile zerlegtes Möbel unter Verzicht auf beispielsweise vorstehende Teile für eine Lagerung oder einen Transport hinsichtlich der benötigten Verpackung optimiert sein muss.

Diese Aufgabenstellungen mit ihren vielfältigen Nuancen werden durch eine Verbindung zweier aufeinander senkrecht stehenden, sich durchdringenden Platten durch ein Herstellungsverfahren gemäß des Anspruchs 1 gelöst. Das Verfahren nach der Erfindung weist eine Reihe von Vorteilen auf, auch wenn die Bearbeitung beider zu verbindenden Platten verlangt wird, wobei die Reihenfolge der Bearbeitung dahingestellt bleiben kann.

Gemäß des Verfahrens ist vorgesehen, dass von einer Schmalseite einer ersten Platte aus ein Schlitz mit parallelen Schlitzwänden gefräst wird, wobei die Drehachse des Fräsers senkrecht auf der Platte steht. Die Breite des Schlitzes ist dabei geringer bemessen als die Materialstärke der zweiten Platte.

Damit dieser Schlitz eine exakte Länge zwischen der Schmalseite und einem Schlitzboden aufweist, ist ferner vorgesehen, dass durch ein Einbringen von Ausnehmungen vor dem Schlitzboden dessen Breite senkrecht zu den Schlitzwänden wenigstens der Breite des Schlitzes entspricht. Ausrundungen in Schlitzecken durch den Radius des Fräsers sind durch diese Maßnahme sicher vermieden und es steht der Schlitzboden als exakte Anlagefläche zur Verfügung.

Dabei ist die Breite des Schlitzes und vorzugsweise der Optik wegen als weitere Maßnahme die Breite des Schlitzbodens nebst der Ausnehmungen geringer bemessen als die nominelle Materialstärke der zweiten Platte.

In einem weiteren Verfahrensschritt ist vorgesehen, dass über dem Schlitz eine Nut eingebracht wird, deren Breite größer bemessen ist als die nominelle Materialstärke der zweiten Platte und deren Länge, ausgehend von der Schmalseite der ersten Platte, sich über den Schlitzboden hinaus erstreckt. Durch diese Maßnahmen wird erreicht, dass eine zweite Platte über ihren Querschnitt sicher innerhalb der Nut aufgenommen werden kann.

Bei diesem Verfahrensschritt von besonderer Bedeutung ist die Maßnahme, dass die Tiefe der Nut derart bemessen ist, dass ein um den Schlitz umlaufender Steg von definierter Materialstärke verbleibt. Solches ist leicht zu bewerkstelligen, in dem beispielsweise ein Fräser über einer Werkbank als Nullebene positioniert wird, auf der die erste Platte aufliegt, bspw. innerhalb eines CNC-Fräszentrums. Durch diese letztgenannte Maßnahme wird für die Verbindung zweier Platten gleichsam eine eigene Materialstärke definiert, die unabhängig von jedweden Maßtoleranzen der Materialstärken der Platten ist. Dabei kann diese definierte Materialstärke insbesondere auch den Abmessungen eines Werkzeugs entsprechen, beispielsweise eines Fräsers.

Entsprechend dieser definierten Materialstärke ist die Breite zweier sich gegenüberliegenden, in die Flachseiten der zweiten Platte eingebrachten Nuten bemessen. Infolge dieser Maßnahme wird der um den Schlitz umlaufende Steg längs der Schlitzwände exakt von den Nuten eingefasst.

Die Tiefe der in die beiden Flachseiten der zweiten Platte eingebrachten Nuten ist dabei derart bemessen, dass ein Steg zwischen den Nuten verbleibt, dessen Materialstärke paßgenau, gegebenenfalls geringfügig kleiner bemessen ist als die Breite des Schlitzes, so dass auch hier Maßtoleranzen keine Rolle spielen.

Ein zwangloses Zusammenführen der beiden Platten ist so ermöglicht, wobei durch das exakte Einfassen des Steges durch die Nuten ein Spiel zwischen den beiden Platten quer zu der Längserstreckung der Nuten ausgeschlossen ist. Des Weiteren sitzt die zweite Platte mit einer Schmalseite exakt auf dem Schlitzboden auf, da dieser von ausreichender Breitenabmessung ist.

In weiterer Ausgestaltung des Verfahrens nach der Erfindung ist vorgesehen, dass die zwei sich gegenüberliegenden Nuten sich über die gesamte Höhe der zweiten Platte erstrecken und dass die Höhe der zweiten Platte geringer bemessen ist als die Länge des Schlitzes in der ersten Platte zwischen der Schmalseite der ersten Platte und dem Schlitzboden. Mithin lässt sich die zweite Platte vollständig in den Schlitz in der ersten Platte einbringen und es verbleibt ein Überstand der ersten Platte über der der auf dem Schlitzboden aufliegenden Schmalseite gegenüberliegenden Schmalseite der zweiten Platte.

In diesen Überstand und damit in die Schmalseite der ersten Platte ist ferner ein Falz eingebracht, die derart bemessen ist, dass sie zum einen in einer Ebene mit der der auf dem Schlitzboden aufliegenden Schmalseite gegenüberliegenden Schmalseite der zweiten Platte liegt. Hierdurch wird, in einer Draufsicht, eine T-förmige Auflage vor der ersten Platte ausgebildet.

Durch den Falz werden beidseits des Schlitzes zwei der Ebene vorstehende Zapfen einer definierten Materialstärke ausgebildet, deren Höhe geringer bemessen ist als die Materialstärke einer dritten Platte. Diese definierte Materialstärke kann wieder der Stärke beispielsweise eines Fräsers entsprechen, so dass in exakt korrespondierender Breite in die dritte Platte in einer Flucht zwei Nuten eingebracht werden können, die einer hinsichtlich der Breiten passgenauen Aufnahme dieser vorstehenden Zapfen dann auch dienen.

Die jeweilige Länge und Tiefe der Nuten entspricht dabei wenigstens der Länge und der Höhe des jeweiligen Zapfens. Ferner ist das zwischen den Nuten verbleibende Zwischenstück in Verlaufsrichtung der Nuten paßgenau, gegebenenfalls kleiner zu bemessen als die Breite des Schlitzes in der ersten Platte, so dass die dritte Platte problemlos, mit in den Schlitz der ersten Platte eingreifenden Zwischenstück, auf die sich kreuzenden ersten beiden Platten aufgesetzt werden kann.

Zwei derartige Holzverbindungen, die durch eine gemeinsame zweite und dritte Platte verbunden sind, erlauben den Aufbau von Möbeln, beispielsweise Sitzbänken oder Tischen, aber auch Regalsysteme und dergleichen mehr.

Dabei dienen die zwei ersten Platten der Holzverbindungen als Seitenwangen oder Füße, die von der dritten Platte als Sitzfläche, Tischplatte oder Oberseite eines Regalfachs überdeckt werden, während die zweite Platte im Wesentlichen eine die dritte Platte abstützende und aussteifende Funktion aufweist und die Verbindung zwischen der dritten und der ersten Platte stabilisiert.

Die Stabilität derartiger Verbindungen kann naturgemäß durch Schraubverbindungen weiter erhöht werden, sofern dies als notwendig erachtet werden sollte.

Bei einer solchen Schraubverbindung zweier Schmalseite auf Flachseite angeordneten, senkrecht aufeinander stehenden Platten wird dabei darauf abgestellt, dass die mit einer Flachseite auf der Schmalseite aufliegende Platte über der Schmalseite eine Auflage für einen Schraubkopfes einer Gewindeschraube aufweist, dass die Auflage eine zentrale Bohrung durch die Platte aufweist, die sich in der Schmalseite der anderen Platte fortsetzt und dass die Bohrung in der Schmalseite eine Nut in einer Flachseite für die Aufnahme einer Mutter kreuzt.

Bei dieser Schraubverbindung ist insbesondere daran gedacht, dass die dritte Platte den Schraubkopf tragend mit der ersten Platte verschraubt wird.

Dabei kann in weiterer Ausgestaltung vorgesehen sein, dass die Nut die Platte durchsetzt, gegebenenfalls auch an einer Schmalseite offen ist. Weitere, konstruktive Merkmale sehen vor, dass die Auflage der Grund einer den Schraubkopf aufnehmenden Ausnehmung ist, so dass insbesondere der Schraubkopf der Flachseite nicht vorsteht.

In weiterer Ausgestaltung ist vorgesehen, dass um den Schraubkopf eine ringförmig umlaufende Ringnut mit einer Durchgangsbohrung für ein Abfließen von Stauwasser vorgesehen ist. Solches ist bei einer Verwendung im Freien von besonderem Vorteil.

Des Weiteren kann vorgesehen sein, dass die Auflage einen geringeren Durchmesser aufweist als der Schraubkopf, so dass zwischen einem Grund einer Ausnehmung und dem Schraubkopf ein umlaufender Schlitz verbleibt, an dem beispielsweise Schlaufen von Sitzkissen, Tischdecken oder dergleichen befestigt werden können. Eine solche Auflage kann bspw. durch Ausfräsen der Platte erreicht werden, alternativ kann eine solche Auflage durch eine zusätzliche Rändelmutter oder dergleichen gesondert ausgebildet werden.

Letztlich kann vorgesehen werden, dass die Gewindeschraube und/oder die Mutter durch eine Rändelschraube bzw. Rändelmutter ausgebildet ist. Ein Zusammenbau dieser Schraubverbindung ohne Werkzeug ist dadurch ermöglicht.

Die Erfindung wird anhand der Zeichnung näher erläutert, in der lediglich Ausführungsbeispiele schematisch dargestellt sind. In der Zeichnung zeigt:
- Fig. 1:: eine Frontansicht einer ersten Platte,
- Fig. 2:: eine Draufsicht auf eine Schmalseite gemäß Pfeil II in Figur 1,
- Fig. 3:: eine Draufsicht auf eine Schmalseite einer zweiten Platte,
- Fig. 4:: eine erste isometrische Darstellung der Verbindung nach der Erfindung,
- Fig. 5:: eine zweite isometrische Darstellung,
- Fig. 6:: eine Schauseite der Verbindung,
- Fig. 7:: eine isometrische Darstellung eines weiteren Ausführungsbeispiels,
- Fig. 8:: einen Schnitt durch parallel zu einer Flachseite einer zweiten Platte,
- Fig. 9:: eine Unteransicht einer dritten Platte,
- Fig. 10:: eine isometrische Darstellung der Verbindung,
- Fig. 11:: eine isometrische Darstellung einer Verschraubung nach Art einer Explosionszeichnung,
- Fig. 12:: weitere Ausführungsbeispiele einer Verschraubung,
- Fig. 13:: eine dritte Platte in einer Draufsicht,
- Fig. 14:: eine Möbelanordnung und
- Fig. 15:: eine vergrößerte Darstellung des in Figur 14 markierten Bereichs.

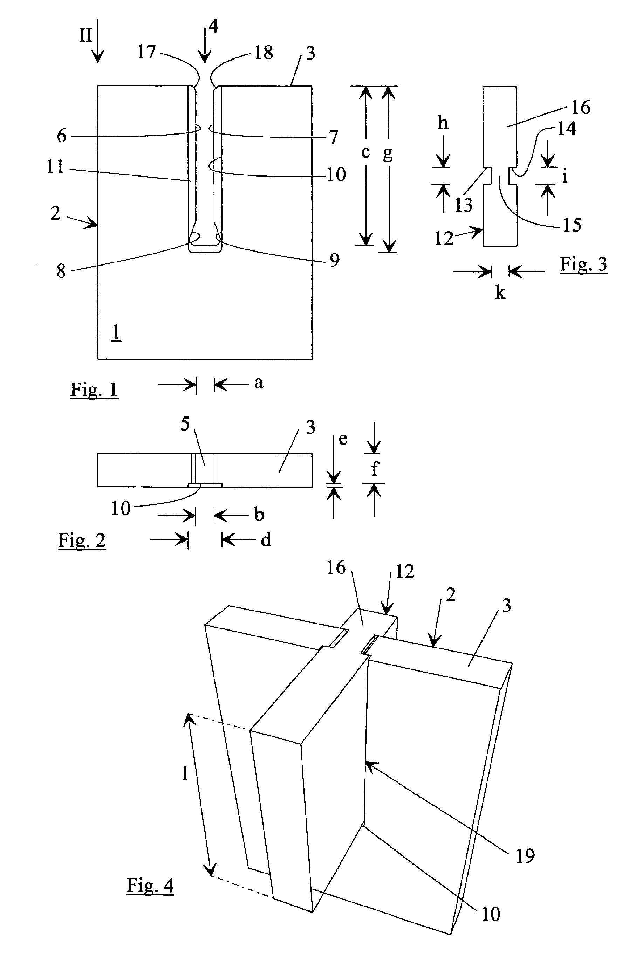

Figur 1 zeigt in einer Draufsicht auf eine Flachseite 1 eine Platte 2 mit einem von einer Schmalseite 3 her eingebrachten Schlitz 4. Der Schlitz 4 endet mit einem Schlitzboden 5, der senkrecht auf den parallel und senkrecht zu der Flachseite 1 der Platte 2 eingebrachten Schlitzwänden 6,7 steht.

Das Einbringen des Schlitzes 4 erfolgt beispielsweise mittels eines Fingerfräsers, dessen Drehachse senkrecht auf der Flachseite 1 steht. Damit hierdurch zwischen dem Schlitzboden 5 und den Schlitzwänden 6,7 keine Ausrundungen entstehen, werden vor dem Schlitzboden Ausnehmungen 8,9 eingebracht, so dass die Breite a des Schlitzes 4 wenigstens auch der als Auflagefläche nutzbaren Breite b des Schlitzbodens 5 zwischen den durch die Ausfräsung bedingten Abrundungen der Ausnehmungen 8,9 entspricht. Damit steht die volle Länge c des Schlitzes 4 zwischen der Schmalseite 3 und dem Schlitzboden 5 für ein Einbringen einer zweiten Platte 12 zur Verfügung.

Die Breite a des Schlitzes 4 sowie die Breite c des Schlitzbodens 5, vorzugsweise nebst den Ausnehmungen 8,9, ist kleiner bemessen als die Materialstärke dieser zweiten Platte 12.

In einem weiteren Verfahrensschritt wird über dem Schlitz 4 eine Nut 10 eingebracht, deren Breite d größer bemessen ist als die Materialstärke der zweiten Platte 12.

Von Bedeutung ist, dass die Tiefe e der Nut 10 derart bemessen ist, dass hier ein um den Schlitz 4 umlaufender Steg 11 verbleibt, der eine definierte Materialstärke f aufweist.

Die Länge g der Nut 10 ist größer bemessen als die Länge c des Schlitzes 4, so dass in der Nut 10 sicher, auch bei Maßtoleranzen, eine Anlage einer zweiten Platte 12 über deren Querschnitt erfolgen kann.

Die zweite Platte 12 wird mit sich gegenüberliegenden Nuten 13,14 versehen. Deren Breite h,i ist jeweils derart bemessen, dass sie der definierten Materialstärke f des Steges 11 entsprechen, diesen Steg 11 also mit Einschieben in den Schlitz 4 passgenau einfassen. Die Materialstärke k des zwischen den Nuten 13,14 verbleibenden Steges 15 ist dabei paßgenau, gegebenenfalls geringfügig geringer bemessen als die Breite a des Schlitzes 4, so dass ein zwangloses Einbringen der zweiten Platte 12 in den Schlitz 4 gewährleistet ist.

Bei dem Ausführungsbeispiel entspricht die Höhe 1 der Platte 12 der Länge c des Schlitzes 4, so dass die oberen Schmalseiten 3,16 in einer Ebene liegen. Das Vorhersehen von Abschrägungen 17,18 und/oder Abrundungen in der Schmalseite 3 an den Enden der Schlitzwände 6,7, die dem leichteren Einführen der zweiten Platte 12 in den Schlitz 4 dienlich sind, steht dem nicht entgegen.

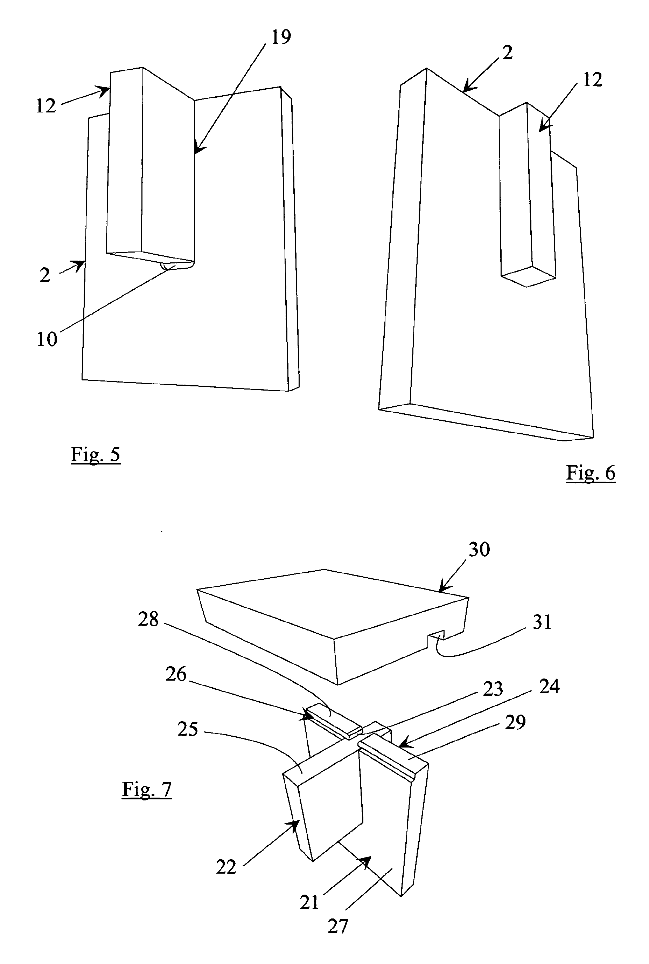

Die Figuren 5 und 6 zeigen unterschiedliche Ansichten der beiden sich durchdringenden Platten 2,12. Während Figur 5 aufzeigt, dass die Nut 10 über dem Schlitz 4 sichtbar verbleibt, gegebenenfalls auch im Bereich des Stoßes 19 der beiden Platten 2,12, so zeigt Figur 6 eine Schauseite, bei der saubere Anschlüsse zwischen den beiden Platten 2,12 erreicht wurden.

Bei dem Ausführungsbeispiel gemäß den Figuren 7-10 sind eine erste Platte 21 und eine zweite Platte 22 entsprechend dem vorangehenden Ausführungsbeispiel miteinander verbunden worden. Lediglich die Höhe m der zweiten Platte 22 ist geringer bemessen als die Länge n des Schlitzes 23, so dass von der ersten Platte 21 ein Überstand 24 über der oberen Schmalseite 25 der zweiten Platte 22 ausgebildet wird.

Dieser Überstand 24 ist mit einem Falz 26 versehen die derart bemessen ist, dass sie zum einen in der Ebene der Schmalseite 25 der zweiten Platte 22 abschließt, wodurch eine T-förmige Auflagefläche vor der Flachseite 27 der ersten Platte 21 ausgebildet wird.

Zum anderen wird durch den Falz 26 die Materialstärke des Überstands 24 derart abgetragen, dass zwei Zapfen 28,29 definierter Materialstärke o verbleiben.

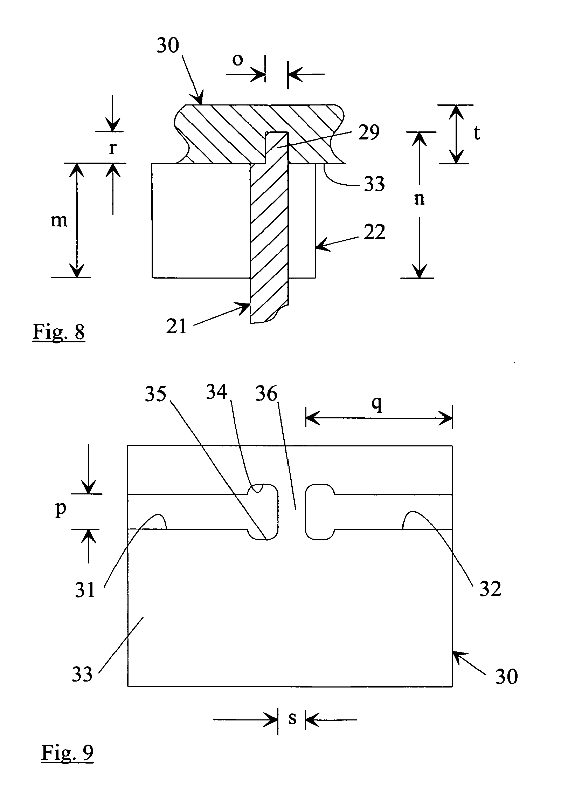

Für eine Überdeckung der Verbindung der ersten und der zweiten Platte 21,22 gemäß Figur 7 durch eine dritte Platte 30 wird diese mit zwei fluchtenden Nuten 31,32 in der unteren Flachseite 33 versehen, vergleiche Figur 9. Die Breite p der beiden Nuten 31,32 entspricht der der definierten Materialstärke o der Zapfen 28,29.

Die Länge q der Nuten 31,32 wie auch die Tiefe der Nuten 31,32 ist geringfügig größer bemessen als die Länge und die Höhe r der Zapfen 28,29, wozu die Nuten 31,32 gegebenenfalls auch mit Ausnehmungen 34,35 nach Art des Schlitzes 4 versehen sein können.

Aufgrund dieser Maßnahmen ist die Länge s des zwischen den Nuten 31,32 verbleibende Zwischenstück 36 in Verlaufsrichtung der Nuten 31,32 geringfügig kleiner bemessen als die Breite des Schlitzes 23 und fügt sich problemlos in diesen ein.

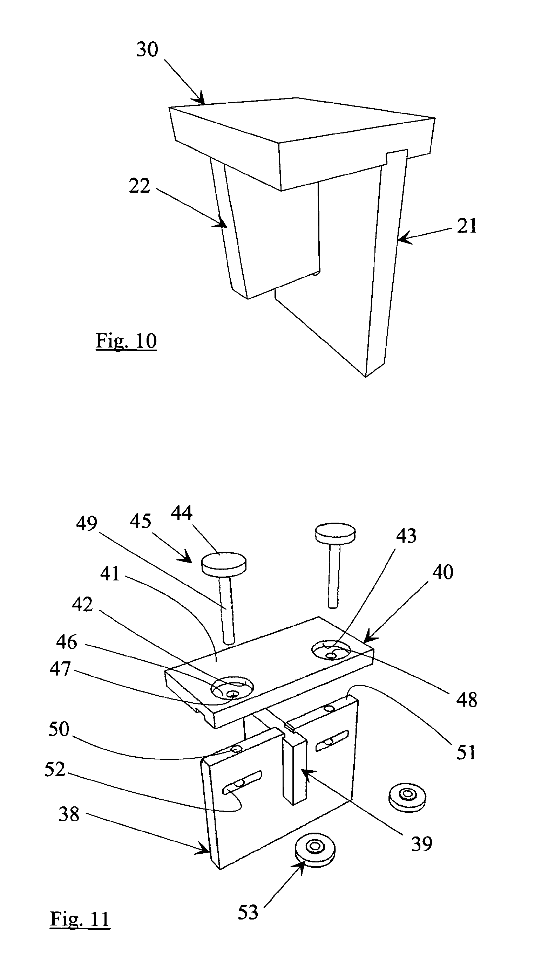

Um insbesondere die dritte Platte 30 mit der ersten Platte 21 weiter zu verbinden, kann die anhand der Figuren 11-13 weiter erläuterte Schraubverbindung Verwendung finden.

Figur 11 zeigt nach Art einer Explosionsdarstellung den Verbund einer ersten Platte 38 mit einer zweiten Platte 39. Auf diesen Verbund der beiden Platten 38,39 wird eine dritte Platte 40, wie voranstehend erläutert, aufgesetzt.

In ihrer oberen Flachseite 41 weist die dritte Platte 40 zwei runde Ausnehmungen 42,43 auf, die jeweils der Aufnahme eines Kopfs 44 einer Rändelschraube 45 dienen, wobei ein Grund 46 dieser Ausnehmungen 42,43 eine Auflage für den Kopf 44 der Rändelschraube 45 ausbildet. Mittig der Ausnehmungen 42,43 ist jeweils eine Bohrung 47,48 für einen Gewindeschaft 49 der Rändelschraube 45 eingebracht, die mit jeweils einer Bohrung 50 in der Schmalseite 51 der ersten Platte 38 fluchten. Diese Bohrungen 50 kreuzen jeweils eine Nut 52, die derart bemessen ist, dass dort für ein Festlegen der Rändelschraube 45 eine Rändelmutter 53 einbringbar ist.

Entsprechend dem Durchmesser der Rändelmutter 53 ist die Tiefe der Nut 52 zu bemessen und wird die Nut 52 zumeist die Platte 38 durchsetzen.

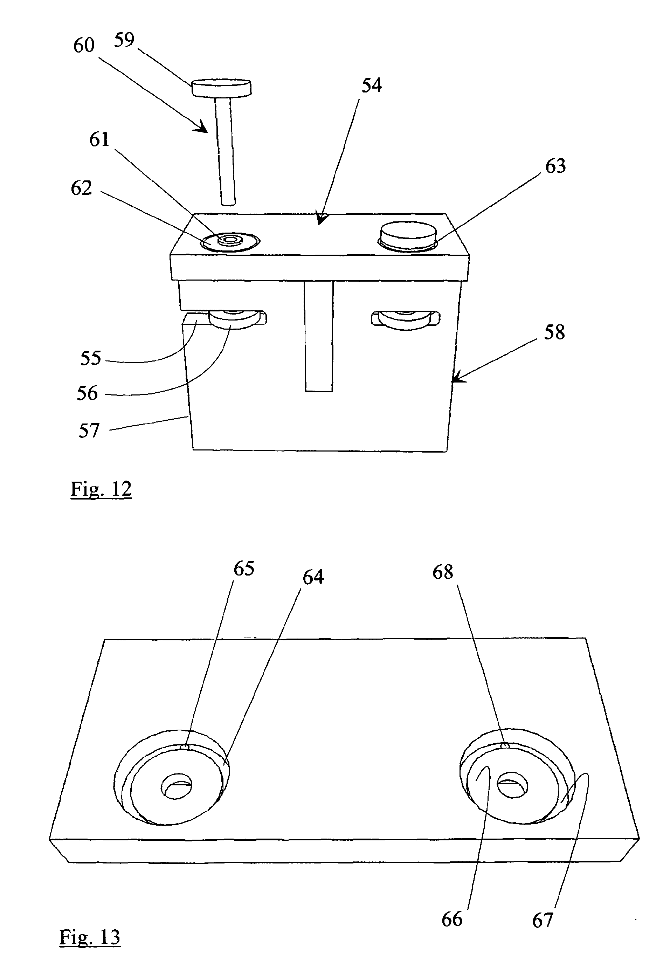

Varianten einer solchen Schraubverbindung zeigen die Figuren 12 und 13.

So kann eine Nut 55 für die Aufnahme einer Rändelmutter 56 hin zu einer Schmalseite 57 einer Platte 58 offen sein, vergleiche Figur 12, linke Bildhälfte.

Auch die Auflage für einen Kopf 59 einer Rändelschraube 60 kann verschiedenartig gestaltet werden. Die linke Bildhälfte der Figur 12 zeigt eine Auflage 61, deren Durchmesser kleiner bemessen ist als der Durchmesser des Kopfes 59. Infolgedessen steht die Auflage 61 dem Grund 62 der Ausnehmung vor und wird zwischen der Unterseite des Schraubkopfs 59 und dem Grund 62 ein Spalt 63 ausgebildet. Dieser kann beispielsweise dem Einhängen von Schlaufen von Sitzkissen oder dergleichen dienen.

Dabei kann die Auflage 61 durch die Platte 54 selbst oder alternativ durch bspw. eine weitere Rändelmutter gesondert ausgebildet werden.

Für eine bessere Zugänglichkeit dieses Spalts 63 und insbesondere für ein Sammeln und Abführen von Wasser bei einer Verwendung im Freien ist eine um den Schraubkopf 59 umlaufende, ringförmige Ringnut 64 noch vorgesehen, die mit einer Durchgangsbohrung 65 verbunden ist, vergleiche Figur 13. Dabei ist die Tiefe der Ringnut 65 derart bemessen, dass eine Auflage 66 einem Nutgrund 67 vorsteht, in dem die Durchgangsbohrung 68 eingebracht ist.

Für einen ungehinderten Wasserabfluss sind die Durchgangsbohrung 65, 68 ferner derart zu positionieren, dass sie neben der ersten Platte 58 austritt.

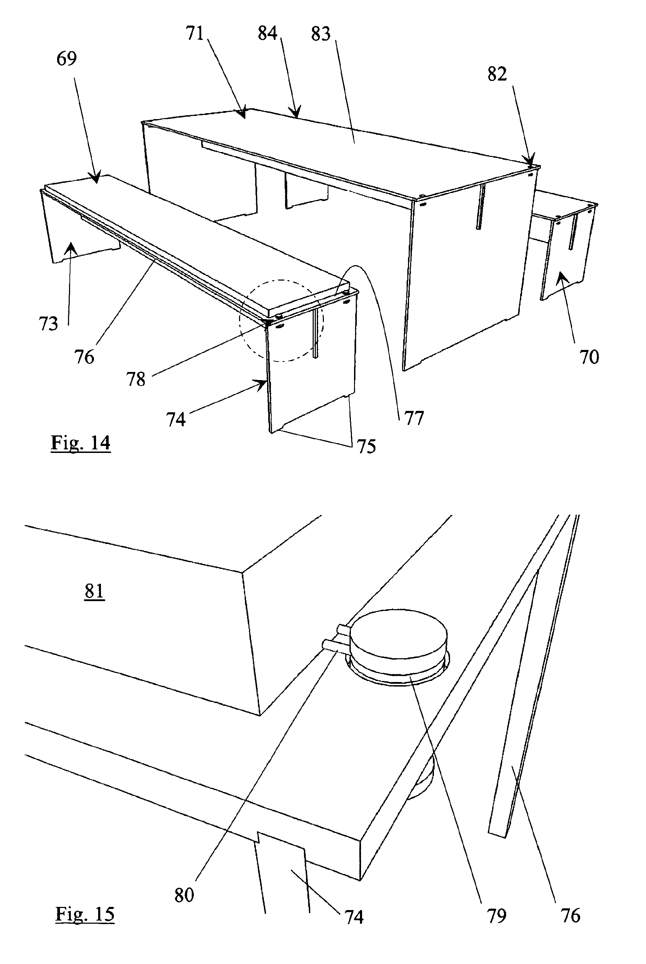

Figur 14 zeigt eine Möbelgarnitur, bestehend aus zwei Bänken 69,70 und einem Tisch 71.

Die Bank 69 weist zwei erste Platten 73,74 auf, die jeweils mit Füßen 75 versehen sind. Mit nach außen liegenden Schauseiten gemäß Figur 6 sind die beiden ersten Platten 73,74 durch eine gemeinsame zweite Platte 76 miteinander verbunden. Die beiden ersten Platten 73,74 sowie die gemeinsame zweite Platte 76 tragen in der voranstehend erläuterten Weise eine gemeinsame dritte Platte 77.

Durch die Unterstützung der dritten Platte 77 durch die zweite Platte 76, hochkant angeordnet, ist ein ungewöhnlich stabiles Möbel hier in Form einer Bank 69 geschaffen.

Die Bank 69 ist ferner mit einer Verschraubung 78 versehen, die, wie voranstehend erläutert, einen Schlitz 79 belässt, in den eine Schlaufe 80 bspw. einer Polsterauflage 81 einhängbar ist, vergleiche Figur 15.

Bei dem Tisch 71 sind hingegen die Verschraubungen 82 gemäß Figur 11 ausgebildet, so dass keine Schraubköpfe der Flachseite 83 der als Tischplatte dienenden dritten Platte 84 vorstehen.

### Bezugszeichenliste:

- 1.: Flachseite
- 2.: Platte
- 3.: Schmalseite
- 4.: Schlitz
- 5.: Schlitzboden
- 6.: Schlitzwand
- 7.: Schlitzwand
- 8.: Ausnehmung
- 9.: Ausnehmung
- 10.: Nut
- 11.: Steg
- 12.: Platte
- 13.: Nut
- 14.: Nut
- 15.: Steg
- 16.: Schmalseite
- 17.: Abschrägung
- 18.: Abschrägung
- 19.: Stoß
- 20.:
- 21.: Platte
- 22.: Platte
- 23.: Schlitz
- 24.: Überstand
- 25.: Schmalseite
- 26.: Falz
- 27.: Flachseite
- 28.: Zapfen
- 29.: Zapfen
- 30.: Platte
- 31.: Nut
- 32.: Nut
- 33.: Flachseite
- 34.: Ausnehmung
- 35.: Ausnehmung
- 36.: Zwischenstück
- 37.:
- 38.: Platte
- 39.: Platte
- 40.: Platte
- 41.: Flachseite
- 42.: Ausnehmung
- 43.: Ausnehmung
- 44.: Kopf
- 45.: Rändelschraube
- 46.: Grund
- 47.: Bohrung
- 48.: Bohrung
- 49.: Gewindeschaft
- 50.: Bohrung
- 51.: Schmalseite
- 52.: Nut
- 53.: Rändelmutter
- 54.: Platte
- 55.: Nut
- 56.: Rändelmutter
- 57.: Schmalseite
- 58.: Platte
- 59.: Kopf
- 60.: Rändelschraube
- 61.: Auflage
- 62.: Grund
- 63.: Spalt
- 64.: Ringnut
- 65.: Durchgangsbohrung
- 66.: Auflage
- 67.: Nutgrund
- 68.: Durchgangsbohrung
- 69.: Bank
- 70.: Bank
- 71.: Tisch
- 72.:
- 73.: Platte
- 74.: Platte
- 75.: Fuß
- 76.: Platte
- 77.: Platte
- 78.: Verschraubung
- 79.: Schlitz
- 80.: Schlaufe
- 81.: Polsterauflage
- 82.: Verschraubung
- 83.: Flachseite
- 84.: Platte

- a: Breite von 4
- b: Breite von 5
- c: Länge von 4
- d: Breite von 10
- e: Tiefe von 10
- f: Materialstärke von 11
- g: Länge von 10
- h: Breite von 13
- i: Breite von 14
- k: Materialstärke von 15
- l: Höhe von 12
- m: Höhe von 22
- n: Länge von 23
- o: Materialstärke von 28,29
- p: Breite von 31,32
- q: Länge von 31,32
- r: Höhe von 28,29
- s: Länge von 36
- t: Materialstärke von 30

## Patentansprüche

1. Verfahren für das Herstellen einer Verbindung zweier aufeinander senkrecht stehenden, sich durchdringenden Platten, **dadurch gekennzeichnet,**
- **dass** von einer Schmalseite (3) einer ersten Platte (2) aus ein Schlitz (4) mit parallelen Schlitzwänden (6,7) gefräst wird, wobei die Drehachse des Fräsers senkrecht auf der Platte (2) steht,
- **dass** durch ein Einbringen von Ausnehmungen (8,9) vor einem Schlitzboden (5) dessen Breite (b) senkrecht zu den Schlitzwänden (6,7) wenigstens der Breite (a) des Schlitzes (4) entspricht,
- wobei die Breite (a) des Schlitzes (4) geringer bemessen ist als die nominelle Materialstärke der zweiten Platte (12),
- **dass** über dem Schlitz (4) eine Nut (10) eingebracht wird, deren Breite (d) größer bemessen ist als die nominelle Materialstärke der zweiten Platte (12), deren Länge (g) sich über den Schlitzboden (5) hinaus erstreckt und deren Tiefe (e) derart bemessen ist, dass ein Steg (11) von definierter Materialstärke (f) verbleibt, und
- **dass** in die zweite Platte (12) zwei sich gegenüberliegende Nuten (13,14) in die Flachseiten eingebracht werden, deren jeweilige Breite (h,i) der definierten Materialstärke (f) entspricht, deren Tiefe derart bemessen ist, dass ein Steg (15) zwischen den Nuten (13,14) verbleibt, dessen Materialstärke (k) geringer bemessen ist als die Breite (a) des Schlitzes (4) .

2. Verfahren nach Anspruch 1, **dadurch gekennzeichnet, dass** die zwei sich gegenüberliegenden Nuten der zweiten Platte (22) sich über die gesamte Höhe (m) der zweiten Platte (22) erstrecken, dass die Höhe (m) der zweiten Platte (22) geringer bemessen ist als die Länge (n) des Schlitzes (23) in der ersten Platte (21) zwischen der Schmalseite und dem Schlitzboden, dass die Schmalseite (28) der ersten Platte (21) mit einem Falz (26) versehen wird, die derart bemessen ist, dass sie in einer Ebene mit einer Schmalseite (25) der zweiten Platte (22) liegt, dass durch den Falz (26) zwei der Ebene vorstehende Zapfen (28,29) einer definierten Materialstärke (o) ausgebildet werden, deren Höhe (r) geringer bemessen ist als die Materialstärke (t) einer dritten Platte (30), dass in die dritte Platte (30) in einer Flucht zwei Nuten (31,32) eingebracht werden, deren Breite (p) der definierten Materialstärke (o) der Zapfen (28,29) entsprechen, deren jeweilige Länge (q) und deren Tiefe wenigstens der Länge und der Höhe (r) des jeweiligen Zapfens (28,29) entspricht, und dass das zwischen den Nuten (31,32) verbleibende Zwischenstück (36) in Verlaufsrichtung der Nuten (31,32) paßgenau oder kleiner bemessen ist als die Breite des Schlitzes (23).

3. Schraubverbindung zweier Schmalseite auf Flachseite angeordneten, senkrecht aufeinander stehenden Platten, insbesondere nach Anspruch 2, **dadurch gekennzeichnet, dass** die mit einer Flachseite auf der Schmalseite (51) aufliegende Platte (40) über der Schmalseite (51) eine Auflage für einen Kopf (44) einer Gewindeschraube (45) aufweist, dass die Auflage eine zentrale Bohrung (47,48) durch die Platte (40) aufweist, die sich in der Schmalseite (51) der anderen Platte (38) fortsetzt und dass die Bohrung (50) in der Schmalseite (51) eine Nut (52) in einer Flachseite für die Aufnahme einer Mutter (53) kreuzt.

4. Schraubverbindung nach Anspruch 3, **dadurch gekennzeichnet, dass** die Nut die Platte durchsetzt.

5. Schraubverbindung nach einem oder mehreren der Ansprüche 3 bis 4, **dadurch gekennzeichnet, dass** die Nut (55) an einer Schmalseite (57) offen ist.

6. Schraubverbindung nach einem oder mehreren der Ansprüche 3 bis 5, **dadurch gekennzeichnet, dass** die Auflage der Grund (46) einer den Kopf (44) aufnehmenden Ausnehmung (42,43) ist.

7. Schraubverbindung nach einem oder mehreren der Ansprüche 3 bis 6, **dadurch gekennzeichnet, dass** um den Kopf (59) eine ringförmig umlaufende Ringnut (64) mit einer Durchgangsbohrung (65) vorgesehen ist.

8. Schraubverbindung nach einem oder mehreren der Ansprüche 3 bis 7, **dadurch gekennzeichnet, dass** die Auflage (61) einen geringeren Durchmesser aufweist als der Kopf (59).

9. Schraubverbindung nach einem oder mehreren der Ansprüche 3 bis 8, **dadurch gekennzeichnet, dass** die Auflage gesondert ausgebildet ist.

10. Schraubverbindung nach einem oder mehreren der Ansprüche 3 bis 9, **dadurch gekennzeichnet, dass** die Gewindeschraube und/oder die Mutter durch eine Rändelschraube (45) bzw. Rändelmutter (53) ausgebildet ist.

11. Möbel mit zwei nach Anspruch 3 hergestellten Holzverbindungen, **gekennzeichnet durch** eine gemeinsame zweite (76) und dritte Platte (77).
